# EUROPÄISCHE PATENTANMELDUNG

(11) **EP 3 372 461 A1**
(43) Veröffentlichungstag der Anmeldung: **12.09.2018**
(21) Anmeldenummer: 17159846.9
(22) Anmeldetag: 08.03.2017
(51) Int. Cl.: B60T 13/74, F16D 55/226, F16D 65/18, F16H 25/22

(54) **ELEKTRISCHE BREMSE**

(71) Anmelder: Narr Beteiligungs GmbH, 73230 Kirchheim/Teck (DE)
(72) Erfinder: Brosowsky, Paul, 73066 Uhingen (DE)
(74) Vertreter: Ruckh, Rainer Gerhard

(57) **Zusammenfassung**

Die Erfindung betrifft eine elektrische Bremse (1) mit einem Elektromotor. Eine elektromechanische Betätigungseinheit ist vorgesehen, welche ein Planeten-Wälz-Getriebe (6) aufweist, mittels dessen eine rotative Bewegung des Elektromotors in eine axiale Bewegung eines Betätigungselements (7) umgesetzt wird. An das Betätigungselement (7) ist eine Bremsbacke (8) als Bremselement gekoppelt.

## Beschreibung

Die Erfindung betrifft eine elektrische Bremse gemäß dem Oberbegriff des Anspruchs 1.

Derartige elektrische Bremsen werden in Maschinen oder Anlagen eingesetzt, um dort Dreh- oder Linearbewegungen ausführende Elemente abzubremsen, zu klemmen oder zu halten. Beispielsweise dienen derartige elektrische Bremsen dazu, rotierende Spindeln, Rundtakttische, Schwungscheiben, Schwenkeinheiten und dergleichen abzubremsen.

Der Erfindung liegt die Aufgabe zugrunde, eine elektrische Bremse mit hoher Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine elektrische Bremse mit einem Elektromotor. Eine elektromechanische Betätigungseinheit ist vorgesehen, welche ein Planeten-Wälz-Getriebe aufweist, mittels dessen eine rotative Bewegung des Elektromotors in eine axiale Bewegung eines Betätigungselements umgesetzt wird. An das Betätigungselement ist eine Bremsbacke als Bremselement gekoppelt.

Die erfindungsgemäße elektromechanische Bremse zeichnet sich gegenüber bekannten hydraulischen oder pneumatischen Systemen durch eine hohe Bremskraft bei geringem Bauraum aus. Ein weiterer Vorteil der Erfindung besteht darin, dass mittels der elektromotorischen Betätigung der Bremse eine definierte Bremskrafteinleitung und Bremskraftregelung ermöglicht wird. Weiterhin arbeitet die erfindungsgemäße elektromechanische Bremse bei hohem Wirkungsgrad deutlich energieeffizienter als vergleichbare hydraulische Systeme. Schließlich trägt das bei der erfindungsgemäßen Bremse eingesetzte Planeten-Wälz-Getriebe dazu bei, dass die Bremse im Vergleich zu Systemen mit anderen bekannten mechanischen Getrieben eine wesentlich längere Standzeit aufweist.

Die erfindungsgemäße elektrische Bremse zeichnet sich durch eine hohe Bremskraft aus. Zudem wird bei der erfindungsgemäßen elektrischen Bremse durch die elektromechanische Betätigung eine spielfreie Aufnahme von Drehmomenten erhalten. Damit kann die erfindungsgemäße elektrische Bremse in unterschiedlichen Applikationen, insbesondere in solchen, bei welchen eine hohe Präzision gefordert wird, eingesetzt werden. Beispiele hierfür sind Einsätze im schweren Maschinenbau oder auch in Präzisions-Bearbeitungsanlagen.

Gemäß einer konstruktiv vorteilhaften Ausgestaltung ist das Planeten-Wälz-Getriebe in einem Antriebsrad integriert.

Die Drehbewegung des Rotors des Elektromotors wird dabei auf das Antriebsrad übertragen. Mittels des Planeten-Wälz-Getriebes im Antriebsrad wird dann die Drehbewegung des Antriebsrads in eine Linearbewegung des Betätigungselements umgesetzt, das sowohl von einer Zugstange als auch von einer Druckstange gebildet sein kann.

Diese Anordnung zeichnet sich durch einen kompakten und einfachen Aufbau aus.

Gemäß einer ersten Variante ist das Antriebsrad direkt über den Elektromotor angetrieben.

In diesem Fall ist der Elektromotor vorteilhaft als Servomotor ausgebildet. Diese Variante zeichnet sich dadurch aus, dass besonders wenig mechanisch bewegte Teile benötigt werden.

Gemäß einer zweiten Variante ist das Antriebsrad über ein dem Elektromotor nachgeordnetes Getriebe angetrieben, welches vorteilhaft als Zahnradgetriebe ausgebildet ist.

Im einfachsten Fall wird mit der Bremsbacke ein Gegenstand direkt abbremsbar.

Damit werden außer der Bremsbacke keine weiteren Bremselemente benötigt, was den Aufbau der erfindungsgemäßen elektrischen Bremse weiter vereinfacht.

Gemäß einer vorteilhaften Ausgestaltung wird mit der Bremsbacke ein Bremskörper als weiteres Bremselement betätigt. Mittels dessen ist ein Gegenstand abbremsbar.

Durch die Zuordnung des Bremskörpers zur Bremsbacke kann eine hohe Bremskraft erzielt werden. Zudem können durch geeignete Ausbildungen des Bremskörpers unterschiedliche Bremsentypen realisiert werden.

Gemäß einer vorteilhaften Ausgestaltung ist über das Drehmoment des Elektromotors eine Bremskrafteinstellung durchführbar.

Die Einstellung der Bremskraft über den Elektromotor ist sehr genau und präzise durchführbar. Durch diese Bremskrafteinstellung ist eine flexible Anpassung an unterschiedliche Bremsvorgänge möglich.

Die Funktionalität der erfindungsgemäßen elektrischen Bremse kann dadurch noch erweitert werden, dass eine Sensorik zur Bremskrafterfassung vorgesehen ist. Abhängig von den Signalen der Sensorik ist eine Bremskraftregelung durchführbar.

Eine derartige Sensorik kann beispielsweise von einer Kraftmessdose an der Zugstange oder Druckstange ausgebildet sein. Alternativ kann eine Geschwindigkeits-Sensorik an abzubremsenden rotierenden Maschinenelementen vorgesehen sein. Durch die Regelung der Bremskraft in Abhängigkeit der Signale der jeweiligen Sensorik können gezielt zeitabhängige Bremsvorgänge vorgegeben und optimiert werden.

Gemäß einer weiteren vorteilhaften Ausgestaltung der Erfindung sind sensorische Positionserfassungsmittel zur Erfassung der Drehwinkellage des Rotors, des Elektromotors oder des Betätigungselements vorgesehen, wobei anhand von Messwerten der Positionserfassungsmittel eine Verschlusskontrolle von Bremselementen durchführbar ist.

Durch diese Überwachungsfunktion wird die Funktionssicherheit der erfindungsgemäßen Bremse erhöht.

Die erfindungsgemäße elektrische Bremse kann in unterschiedlichen Ausführungsformen, mit denen auf verschiedene Weise Bremsvorgänge durchgeführt werden, ausgebildet sein.

Gemäß einer ersten Ausgestaltung ist die elektrische Bremse eine Scheibenbremse.

In diesem Fall ist der Bremskörper eine Bremsscheibe.

Die Bremsscheibe ist mit dem abzubremsenden Gegenstand fest verbunden, so dass bei nicht betätigter Bremse die Bremsscheibe mit dem Gegenstand mitrotiert. Bei Durchführen des Bremsvorgangs wird die Bremsscheibe über die Bewegung der Bremsbacke an einem stationären Element verspannt.

Vorteilhaft weist die Scheibenbremse eine Nothalteeinheit auf, mittels derer das Bremselement im stromlosen Zustand des Elektromotors mechanisch fixiert ist.

Durch die so realisierte Nothaltefunktion wird die Funktionssicherheit der Scheibenbremse erheblich erhöht, da auch im stromlosen Zustand des Elektromotors eine Bremswirkung gewährleistet ist. Die Bremswirkung der Nothalteeinheit kann über geeignete Stellelemente wie Elektromagnete wieder aufgehoben werden. Weiterhin wird die Nothaltefunktion dann aufgehoben, wenn der Elektromotor wieder bestromt ist und die elektrische Bremse ihren Normalbetrieb wieder aufnehmen kann.

Gemäß einer weiteren Ausgestaltung ist die elektrische Bremse als Trommelbremse ausbildet.

In diesem Fall führt der Bremskörper eine radial nach außen gerichtete Bremsbewegung gegen die Mantelfläche einer Trommel als abzubremsenden Gegenstand aus.

Gemäß einer weiteren Ausgestaltung ist die elektrische Bremse als Stangenbremse ausgebildet.

In diesem Fall führt der Bremskörper eine radial nach innen gerichtete Bremsbewegung gegen die äußere Mantelfläche einer Stange als abzubremsenden Gegenstand aus.

In beiden Fällen ist der Bremskörper vorteilhaft als Segmentspanner ausgebildet, welcher aus mehreren rotationssymmetrisch angeordneten Segmenten, die elastisch miteinander verbunden sind, besteht.

Vorteilhaft wird dabei eine axiale Bewegung des Betätigungselements und der Bremsbacke mittels eines Kegels in eine radiale Bewegung des Bremskörpers umgesetzt.

Damit kann mit konstruktiv einfachen Mitteln die für die Bremsvorgänge erforderliche radiale Bewegung des Bremskörpers, insbesondere des Segmentspanners, erzeugt werden.

Die Erfindung wird im Folgenden anhand der Zeichnungen erläutert. Es zeigen:
- Figur 1:: Erstes Ausführungsbeispiel der erfindungsgemäßen elektrischen Bremse in Form einer Scheibenbremse.
- Figur 2:: Zweites Ausführungsbeispiel der erfindungsgemäßen elektrischen Bremse in Form einer Trommelbremse.
- Figur 3:: Drittes Ausführungsbeispiel der erfindungsgemäßen elektrischen Bremse in Form einer Stangenbremse.

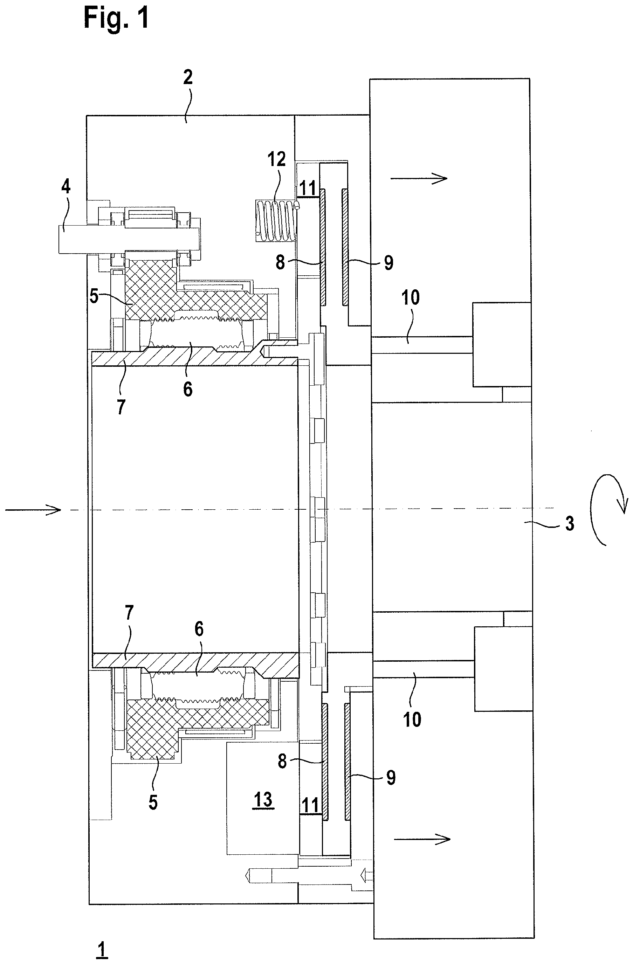

Figur 1 zeigt eine Ausführungsform der erfindungsgemäßen elektrischen Bremse 1 in Form einer Scheibenbremse. Hierbei sind die Komponenten der elektrischen Bremse 1 in einem Gehäuse 2 integriert. Mit der elektrischen Bremse 1 wird im vorliegenden Fall ein Maschinentisch 3 abgebremst, der an das vordere Ende des Gehäuses 2 anschließt. Am hinteren Ende des Gehäuses 2 mündet eine Antriebswelle 4 aus, die eine Anschlussstelle für einen externen, nicht dargestellten Elektromotor bildet. Der Elektromotor kann direkt an die Antriebswelle 4 angeschlossen sein. In diesem Fall ist der Elektromotor als Servomotor ausgebildet. Alternativ kann der Elektromotor über ein Getriebe, insbesondere ein Zahnradgetriebe, an die Antriebswelle 4 angebunden sein.

In einem Antriebsrad 5 ist ein Planeten-Wälz-Getriebe 6 integriert, welches mehrere in Umfangsrichtung der elektrischen Bremse 1 verteilte Planeten bildende Wälzlager umfasst. Mit dem Planeten-Wälz-Getriebe 6 wird die Rotationsbewegung der Antriebswelle 4, die durch den Elektromotor erzeugt wird, in eine Linearbewegung eines Betätigungselements 7 umgesetzt, welches von einer Zugstange oder einer Druckstange gebildet ist. Durch das Planeten-Wälz-Getriebe 6 wird das Betätigungselement 7 in axialer Richtung der elektrischen Bremse 1 verschoben.

Das Betätigungselement 7 ist mit einer Bremsbacke 8 als erstem Bremselement verbunden. Prinzipiell kann die Bremsbacke 8 das einzige Bremselement bilden und alleine eine Bremskraft zum Abbremsen eines Gegenstands bewirken. Im vorliegenden Fall ist der Bremsbacke 8 ein Bremskörper in Form einer Bremsscheibe 9 als zweitem Bremselement zugeordnet. Die Bremsscheibe 9 ist an beiden Stirnseiten mit einem Bremsbelag versehen.

Die Bremsscheibe 9 ist über Verbindungselemente 10 fest mit dem Maschinentisch 3 verbunden, so dass bei nicht betätigter elektrischer Bremse 1 die Bremsscheibe 9 mit dem Maschinentisch 3 mitrotiert.

Zur Betätigung der elektrischen Bremse 1 wird die Bremsbacke 8 mit dem Betätigungselement 7 so verschoben, dass die Bremsbacke 8 gegen die Bremsscheibe 9 gedrückt wird. Dadurch wird die Bremsscheibe 9 zwischen der Bremsbacke 8 und dem Gehäuse 2 verspannt, wodurch der Maschinentisch 3 abgebremst wird. Die hierzu durchgeführten Bewegungen der einzelnen Komponenten sind in Figur 1 mit Pfeilen gekennzeichnet.

Die Größe der Bremskraft kann über die Größe des Drehmoments des Elektromotors vorgegeben werden.

Durch eine Sensorik, wie eine Kraftmessdose an dem Betätigungselement 7, oder eine Geschwindigkeitssensorik am Maschinentisch 3, kann in Abhängigkeit der Signale der Sensorik auch ein geregeltes Abbremsen des Maschinentischs 3 erfolgen.

Durch sensorische Positionserfassungsmittel zur Erfassung der Winkellagen des Elektromotors oder durch eine Wegmessung des Betätigungselements 7 können weiterhin Abnützungen der Kontakte an den Bremsstellen der Bremsscheibe 9 erkannt werden.

Die Scheibenbremse gemäß Figur 1 weist weiterhin eine Nothaltefunktion auf. Diese wird durch eine Halteplatte 11 und dieser zugeordneten Druckfedern 12 realisiert. Mit diesen Elementen wird im stromlosen Zustand des Elektromotors, zum Beispiel bei einem Not-Aus, die Bremsscheibe 9 festgeklemmt, wodurch das Maschinenteil auch im stromlosen Zustand abbremst beziehungsweise fixiert ist. Diese Nothalteklemmung kann über Elektromagnete 13 gelöst werden. Die Elektromagnete 13 bewegen dabei die Halteplatte 11 gegen die Federkräfte der Druckfedern 12.

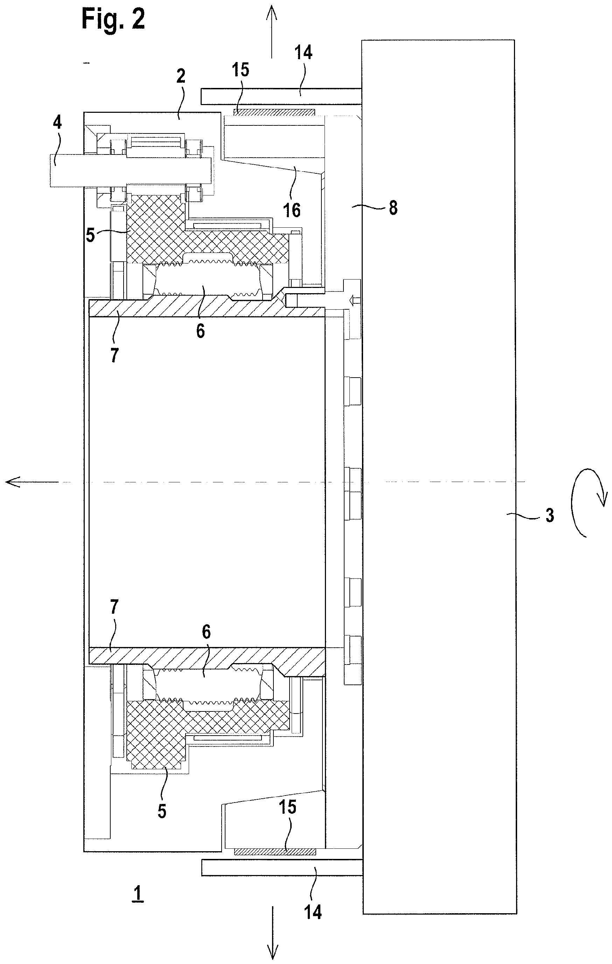

Figur 2 zeigt ein Ausführungsbeispiel der elektrischen Bremse 1 in Form einer Trommelbremse.

Der Aufbau der Trommelbremse stimmt mit der Scheibenbremse gemäß Figur 1 dahingehend überein, dass in einem Gehäuse 2 eine Antriebswelle 4, ein in einem Antriebsrad 5 integriertes Planeten-Wälz-Getriebe 6 und ein Betätigungselement 7, an welches eine Bremsbacke 8 angekoppelt ist, vorgesehen sind.

In weiterer Übereinstimmung mit der Ausführungsform gemäß Figur 1 kann über den Elektromotor eine Bremskrafteinstellung oder, bei Vorsehen einer entsprechenden Sensorik, eine Regelung des Bremsvorgangs vorgenommen werden. Ebenso kann mittels geeigneter Positionserfassungsmittel eine Verschleißkontrolle der Bremselemente vorgesehen sein.

Bei der Trommelbremse gemäß Figur 2 besteht der abzubremsende Gegenstand wieder aus einem Maschinentisch 3. Im Gegensatz zur Ausführungsform gemäß Figur 1 ist jedoch in diesem Fall der Maschinentisch 3 nicht fest mit dem Bremskörper verbunden. Anstelle dessen schließt an den Maschinentisch 3 ein hohlzylindrisches Teil an, das die Trommel 14 der Trommelbremse bildet.

Die Funktionsweise der Bremse ist in Figur 2 wieder mit Pfeilen veranschaulicht, die die Bewegungen der einzelnen Komponenten zeigen

Mit dem Betätigungselement 7 wird wieder eine Bremsbacke 8 in axialer Richtung verschoben, wobei sich im vorliegenden Fall die Bremsbacke 8 an der dem Maschinentisch 3 zugewandten Vorderseite des Gehäuses 2 befindet. Mit der Bremsbacke 8 wird ein Bremskörper betätigt, der im vorliegenden Fall von einem Segmentspanner 15 gebildet ist, der aus einer Anordnung von in Umfangsrichtung der elektrischen Bremse 1 aneinander anschließenden, identisch ausgebildeten und über elastische Elemente verbundenen Segmenten besteht.

Der Segmentspanner 15 ist einem Kegel 16 zugeordnet, der eine Winkelübersetzung ausbildet und zudem zur Bremskraftverstärkung dient. Zur Betätigung der elektrischen Bremse 1 wird die Bremsbacke 8 mit dem Betätigungselement 7 verschoben. Dadurch gleitet der Segmentspanner 15 auf der Schrägfläche des Kegels 16, so dass er in radialer Richtung nach außen bewegt wird und dadurch mit seinen Mantelflächen, an welchen Bremsbeläge vorgesehen sind, gegen die Innenwand der Trommel 14 gepresst wird, wodurch der Maschinentisch 3 abgebremst wird.

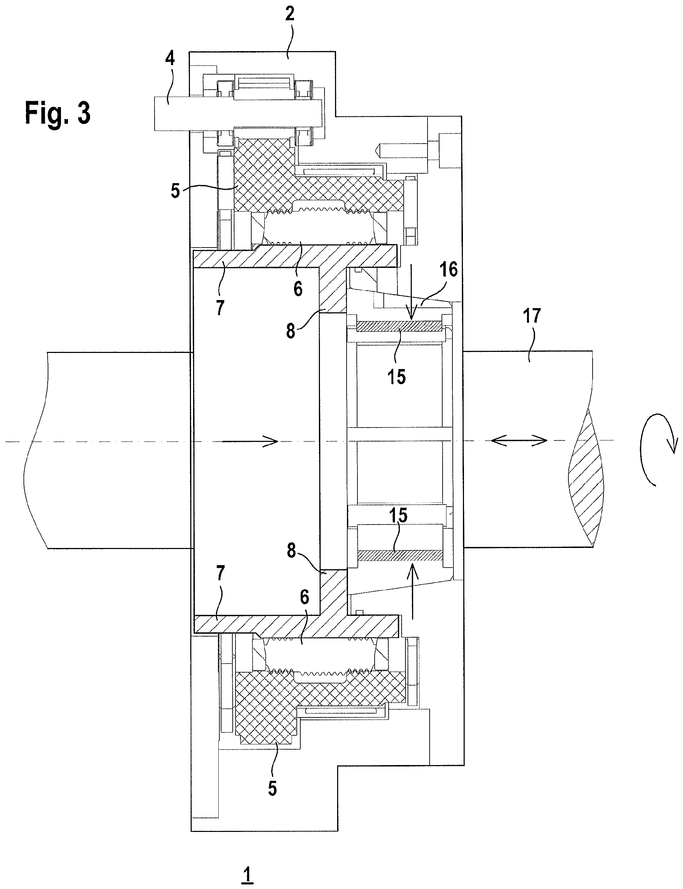

Figur 3 zeigt ein Ausführungsbeispiel der elektrischen Bremse 1 in Form einer Stangenbremse.

Der Aufbau der Stangenbremse stimmt mit der Scheibenbremse gemäß Figur 1 dahingehend überein, dass in einem Gehäuse 2 eine Antriebswelle 4, ein in einem Antriebsrad 5 integriertes Planeten-Wälz-Getriebe 6 und ein Betätigungselement 7, an welches eine Bremsbacke 8 angekoppelt ist, vorgesehen sind.

In weiterer Übereinstimmung mit der Ausführungsform gemäß Figur 1 kann über den Elektromotor eine Bremskrafteinstellung oder, bei Vorsehen einer entsprechenden Sensorik, eine Regelung des Bremsvorgangs vorgenommen werden. Ebenso kann mittels geeigneter Positionserfassungsmittel eine Verschleißkontrolle der Bremselemente vorgesehen sein.

Bei der Stangenbremse gemäß Figur 3 ist der abzubremsende Gegenstand von einer Stange 17 gebildet, die in axialer Richtung der elektrischen Bremse 1 verläuft und von deren Komponenten umschlossen ist.

In Übereinstimmung mit der Ausführungsform gemäß Figur 2 wird mit der durch das Betätigungselement 7 axial verschiebbaren Bremsbacke 8 ein Bremskörper in Form eines Segmentspanners 15 betätigt. Dem Segmentspanner 15 ist wieder ein Kegel 16 zugeordnet, durch welchen die axiale Bewegung der Bremsbacke 8 in eine radiale Bewegung des Segmentspanners 15 umgesetzt wird.

Im Gegensatz zur Ausführungsform gemäß Figur 2 wird bei der Ausführungsform gemäß Figur 3 der Segmentspanner 15 durch die Bewegung der Bremsbacke 8 und die Winkelumsetzung des Kegels 16 radial nach innen bewegt, so dass dessen Mantelflächen, an welchen Bremsbeläge vorgesehen sind, radial nach innen gegen die Stange 17 gedrückt werden, wodurch diese abgebremst wird.

Auch bei der Ausführungsform der Figur 3 sind die Bewegungen einzelner Komponenten der Bremse 1 mit Pfeilen veranschaulicht.

### Bezugszeichenliste

- (1): elektrische Bremse
- (2): Gehäuse
- (3): Maschinentisch
- (4): Antriebswelle
- (5): Antriebsrad
- (6): Planeten-Wälz-Getriebe
- (7): Betätigungselement
- (8): Bremsbacke
- (9): Bremsscheibe
- (10): Verbindungselement
- (11): Halteplatte
- (12): Druckfeder
- (13): Elektromagnet
- (14): Trommel
- (15): Segmentspanner
- (16): Kegel
- (17): Stange

## Patentansprüche

1. Elektrische Bremse (1) mit einem Elektromotor, **dadurch gekennzeichnet, dass** eine elektromechanische Betätigungseinheit vorgesehen ist, welche ein Planeten-Wälz-Getriebe (6) aufweist, mittels dessen eine rotative Bewegung des Elektromotors in eine axiale Bewegung eines Betätigungselements (7) umgesetzt ist, wobei an das Betätigungselement (7) eine Bremsbacke (8) als Bremselement gekoppelt ist.

2. Elektrische Bremse nach Anspruch 1, **dadurch gekennzeichnet, dass** das Planeten-Wälz-Getriebe (6) in einem Antriebsrad (5) integriert ist.

3. Elektrische Bremse nach Anspruch 2, **dadurch gekennzeichnet, dass** das Antriebsrad (5) direkt über den Elektromotor angetrieben ist.

4. Elektrische Bremse nach Anspruch 2, **dadurch gekennzeichnet, dass** das Antriebsrad (5) über ein dem Elektromotor nachgeordnetes Getriebe angetrieben ist.

5. Elektrische Bremse nach Anspruch 4, **dadurch gekennzeichnet, dass** das Getriebe ein Zahnradgetriebe ist.

6. Elektrische Bremse nach einem der Ansprüche 1 bis 5, **dadurch gekennzeichnet, dass** das Betätigungselement (7) eine Zugstange ist.

7. Elektrische Bremse nach einem der Ansprüche 1 bis 6, **dadurch gekennzeichnet, dass** mit der Bremsbacke (8) direkt ein Gegenstand abbremsbar ist.

8. Elektrische Bremse nach einem der Ansprüche 1 bis 7, **dadurch gekennzeichnet, dass** mit der Bremsbacke (8) ein Bremskörper als weiteres Bremselement betätigt wird, mittels dessen ein Gegenstand abbremsbar ist.

9. Elektrische Bremse nach einem der Ansprüche 1 bis 8, **dadurch gekennzeichnet, dass** über das Drehmoment des Elektromotors eine Bremskrafteinstellung durchführbar ist.

10. Elektrische Bremse nach einem der Ansprüche 1 bis 9, **dadurch gekennzeichnet, dass** eine Sensorik zur Bremskrafterfassung vorgesehen ist.

11. Elektrische Bremse nach Anspruch 10, **dadurch gekennzeichnet, dass** abhängig von Signalen der Sensorik eine Bremskraftregelung durchführbar ist.

12. Elektrische Bremse nach einem der Ansprüche 1 bis 11, **dadurch gekennzeichnet, dass** Positionserfassungsmittel zur Erfassung der Position des Elektromotors oder des Betätigungselements (7) vorgesehen sind, wobei anhand von Messwerten der Positionserfassungsmittel eine Verschlusskontrolle von Bremselementen durchführbar ist.

13. Elektrische Bremse nach einem der Ansprüche 1 bis 12, **dadurch gekennzeichnet, dass** diese eine Scheibenbremse ist.

14. Elektrische Bremse nach Anspruch 13, **dadurch gekennzeichnet, dass** der Bremskörper eine Bremsscheibe (9) ist.

15. Elektrische Bremse nach einem der Ansprüche 13 oder 14, **dadurch gekennzeichnet, dass** diese eine Nothalteeinheit aufweist, mittels derer das Bremselement im stromlosen Zustand des Elektromotors mechanisch fixiert ist.

16. Elektrische Bremse nach einem der Ansprüche 1 bis 12, **dadurch gekennzeichnet, dass** diese eine Trommelbremse oder eine Stangenbremse ist.

17. Elektrische Bremse nach Anspruch 16, **dadurch gekennzeichnet, dass** der Bremskörper ein Segmentspanner (15) ist.

18. Elektrische Bremse nach Anspruch 17, **dadurch gekennzeichnet, dass** eine axiale Bewegung des Betätigungselements (7) und der Bremsbacke (8) mittels eines Kegels (16) in eine radiale Bewegung des Bremskörpers umgesetzt ist.
